# EUROPEAN PATENT APPLICATION

(11) **EP 4 807 560 A2**
(43) Date of publication of application: **16.09.2026**
(21) Application number: 26153412.7
(22) Date of filing: 22.01.2026
(51) Int. Cl.: G06F 11/07

(54) **INFORMATION PROCESSING APPARATUS AND CONTROL METHOD**

(30) Priority: 11.03.2025 JP 2025037982
(71) Applicant: Lenovo Japan LLC, Tokyo 101-0021 (JP)
(72) Inventor: KOSUGI, Kazuhiro, Nishi-ku, 3-6-1-21F (JP); TAIRA, Yusuke, Nishi-ku, 3-6-1-21F (JP)
(74) Representative: Openshaw & Co.

(57) **Abstract**

To appropriately preserve a log (history) of processing executed inside a device even when an error occurs in a system.

Provided is an information processing apparatus including: a system memory configured to temporarily store a program of a system; a processor configured to execute system processing by the program stored in the system memory; and a device that includes a controller and an internal memory inside the device and configured to store a history of processing executed inside the device in a ring buffer area as history information, the ring buffer area being a part of the internal memory, in which when detecting occurrence of an error in which the system processing is not able to be normally continued, the processor acquires the history information stored in the ring buffer area in the device from the device, and stores the history information in the system memory.

## Description

### BACKGROUND OF THE INVENTION

### Field of the Invention

The present invention relates to an information processing apparatus and a control method.

### Description of the Related Art

In an information processing apparatus such as a personal computer (PC), it is known that a storage device such as a solid state drive (SSD) is used in a storage device (for example, refer to Japanese Unexamined Patent Application Publication No. 2019-212274).

A storage device such as an SSD holds a log (history) of processing executed inside the storage device in an internal memory, and can read the log and analyze the log when a problem occurs. For example, the SSD uses a part of an area of the internal memory (for example, DRAM) as a ring buffer to write a log, and when the amount of the log to be written exceeds a certain amount, the log is overwritten and deleted from an old log.

### SUMMARY OF THE INVENTION

### [Problems to be solved by the invention]

When an error occurs and a crash occurs (for example, when a blue screen is displayed), a system writes information of a system memory at that time in the SSD as a dump file, but even when a problem related to the SSD occurs, the system generates a dump file when a crash occurs. Therefore, when the system crashes due to the SSD, the dump file is written to the SSD from the system, but the SSD side cannot know that, and the log writing is continued. Therefore, the log may be overwritten, and the log when the original problem occurs cannot be analyzed. This is not limited to a storage device such as the SSD, and the same applies to all devices that store a log (history) of processing executed inside the device in a ring buffer.

The present invention has been made in view of the above circumstances, and an object of the present invention is to provide an information processing apparatus and a control method capable of appropriately preserving a log (history) of processing executed inside a device even when an error occurs in a system.

### [Means for solving the problem]

The present invention has been made in order to solve the above-described problems, and an information processing apparatus according to a first aspect of the present invention includes: a system memory configured to temporarily store a program of a system; a processor configured to execute system processing by the program stored in the system memory; and a device that includes a controller and an internal memory inside the device and configured to store a history of processing executed inside the device in a ring buffer area as history information, the ring buffer area being a part of the internal memory, in which when detecting occurrence of an error in which the system processing is not able to be normally continued, the processor acquires the history information stored in the ring buffer area in the device from the device, and stores the history information in the system memory.

In the information processing apparatus, the processor may acquire the history information stored in the ring buffer area from the device and store the history information in the system memory, and then generate, as a dump file, at least a part of data including the history information stored in the system memory, and store the dump file in the internal memory in the device, and may change a file name of the dump file and store the dump file in the internal memory after the system is rebooted.

The information processing apparatus may further include an embedded controller (EC) for communicating with the processor, in which when detecting the occurrence of the error, the processor may output information, to the EC, based on the occurrence of the error due to the system processing, when acquiring the information based on the occurrence of the output error due to the system processing, the EC may transmit an instruction signal for instructing the device to store the history information, and the device may store the history information stored in the ring buffer area in another area of the internal memory in response to acquisition of the instruction signal transmitted from the EC, and when detecting the occurrence of the error in which the system processing is not able to be normally continued, the processor may acquire the history information stored in the another area of the internal memory.

In the information processing apparatus, when detecting the occurrence of the error, the processor may transmit information, to the device, based on the occurrence of the error due to the system processing, the device may store the history information stored in the ring buffer area in another area of the internal memory in response to acquisition of the information based on the occurrence of the transmitted error due to the system processing, and when detecting the occurrence of the error in which the system processing is not able to be normally continued, the processor may acquire the history information stored in the another area of the internal memory.

In the information processing apparatus, when the error occurs, the processor may display a blue screen on a display unit.

A control method for an information processing apparatus including a system memory configured to temporarily store a program of a system, a processor configured to execute system processing by the program stored in the system memory, and a device that includes a controller and an internal memory inside the device and configured to store a history of processing executed inside the device in a ring buffer area as history information, the buffer area being a part of the internal memory, according to a second aspect of the present invention includes: a step of detecting, at the processor, occurrence of an error in which the system processing is not able to be normally continued; and a step of acquiring, at the processor, the history information stored in the ring buffer area of the device from the device and storing the history information in the system memory when detecting the occurrence of the error.

### [Effect of the invention]

According to the above-described aspects of the present invention, even when an error occurs in a system, a log (history) of processing executed inside a device can be appropriately preserved.

### BRIEF DESCRIPTION OF THE DRAWINGS

FIG. 1 is a block diagram illustrating an example of a hardware configuration of an information processing apparatus according to a first embodiment.
FIG. 2 is a block diagram illustrating an example of a functional configuration of the information processing apparatus according to the first embodiment.
FIG. 3 is a flowchart illustrating an example of log preservation processing according to the first embodiment.
FIG. 4 is a block diagram illustrating an example of a functional configuration of an information processing apparatus according to a second embodiment.
FIG. 5 is a diagram illustrating an outline of a log preservation function according to a third embodiment.
FIG. 6 is a block diagram illustrating an example of a functional configuration of an information processing apparatus according to a third embodiment.
FIG. 7 is a flowchart illustrating an example of log preservation processing according to the third embodiment.
FIG. 8 is a block diagram illustrating an example of a functional configuration of an information processing apparatus according to a fourth embodiment.
FIG. 9 is a block diagram illustrating an example of a functional configuration of an information processing apparatus according to a fifth embodiment.

### DETAILED DESCRIPTION OF THE INVENTION

Hereinafter, embodiments of the present invention will be described with reference to the drawings.

### <First Embodiment>

First, a first embodiment of the present invention will be described.

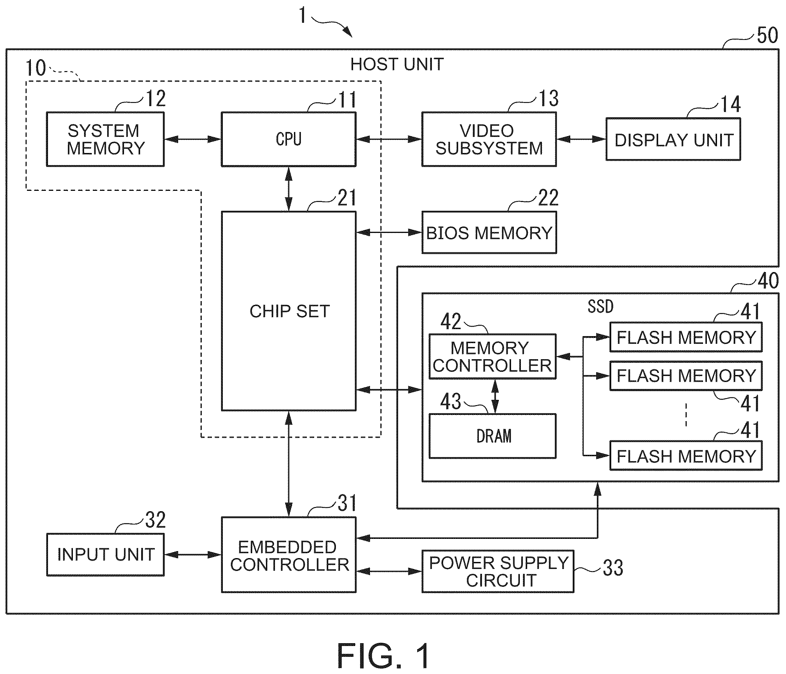

FIG. 1 is a block diagram illustrating an example of a main hardware configuration of an information processing apparatus according to the present embodiment. An information processing apparatus 1 illustrated in the drawing is a clamshell type (laptop) personal computer (PC) as an example.

The information processing apparatus 1 includes a central processing unit (CPU) 11, a system memory 12, a video subsystem 13, a display unit 14, a chip set 21, a basic input output system (BIOS) memory 22, an embedded controller (EC) 31, an input unit 32, a power supply circuit 33, and a solid state drive (SSD) 40.

In the present embodiment, the CPU 11, the system memory 12, the video subsystem 13, the display unit 14, the chip set 21, the BIOS memory 22, the embedded controller 31, the input unit 32, and the power supply circuit 33 are referred to as a host unit 50. In addition, the CPU 11, the chip set 21, and the system memory 12 are referred to as a host control unit 10.

The CPU 11 executes various types of computation processing under program control and controls the entire information processing apparatus 1.

The system memory 12 is a writable memory used as a read area for an execution program of the CPU 11 or as a work area for writing processing data of the execution program. The system memory 12 includes, for example, a plurality of dynamic random access memory (DRAM) chips. The execution program includes an operating system (OS), various drivers for operating hardware such as peripheral devices, various services/utilities, an application program, and the like.

The video subsystem 13 is a subsystem for realizing a function related to image display and includes a video controller. The video controller processes a drawing instruction transmitted from the CPU 11, writes processed drawing information in the video memory, reads the drawing information from the video memory, and outputs the drawing information as drawing data (display data) to the display unit 14.

The display unit 14 is, for example, a liquid crystal display, and displays a display screen based on the drawing data (display data) output from the video subsystem 13. The display unit 14 is not limited to the liquid crystal display, and may be another display such as an organic electroluminescence (EL) display.

The chip set 21 includes a controller for a universal serial bus (USB), a serial AT attachment (ATA), a serial peripheral interface (SPI) bus, a peripheral component interconnect (PCI) bus, a PCI-Express bus, low pin count (LPC) bus, and the like, and a plurality of devices are connected to the chip set 21. In the example illustrated in FIG. 1, as an example of the device, the BIOS memory 22 and the SSD 40 are connected to the chip set 21.

The BIOS memory 22 is constituted by, for example, an electrically rewritable non-volatile memory such as an electrically erasable programmable read only memory (EEPROM) or a flash read only memory (flash ROM). The BIOS memory 22 stores, for example, a BIOS, system firmware for controlling the embedded controller 31, and the like.

The SSD 40 is an example of a storage device including a rewritable non-volatile memory, and stores an OS, various drivers, various services/utilities, an application program, and various types of data. The information processing apparatus 1 executes various types of information processing by using the data stored in the SSD 40. The SSD 40 is connected to the embedded controller 31, which will be described later, by, for example, a system management bus (SMBus). In addition, the SSD 40 is connected to the chip set 21 by, for example, a PCI-Express bus (hereinafter, may be referred to as PCIe).

In addition, the SSD 40 includes a plurality of flash memories 41, a memory controller 42, and a DRAM 43.

The flash memory 41 is, for example, a NAND flash memory and is an example of a rewritable non-volatile memory.

The memory controller 42 is, for example, a processor including a CPU, a ROM, a RAM, and the like (not illustrated), and integrally controls the SSD 40. The memory controller 42 executes, for example, control processing of a host interface (host I/F) with the chip set 21, control processing of a memory interface (memory I/F) with the flash memory 41, and data management processing of the flash memory 41.

A part of the DRAM 43 is used as a retention area for a log (history) of processing executed inside the SSD 40 as a ring buffer area. The memory controller 42 stores a log of processing executed in response to access from the host unit 50 in a ring buffer in the DRAM 43. This log is used for analysis when a problem occurs.

The memory controller 42 generates log data (history information) each time the internal processing is executed, and stores the log data in the ring buffer in the DRAM 43. The ring buffer is a limited area (relatively small area), and when the amount of log data to be written exceeds a certain amount, the log data is overwritten and deleted from old log data.

The embedded controller 31 (an example of an embedded control unit) is a one-chip microcomputer that monitors and controls various devices (peripheral devices, sensors, and the like) regardless of a system state of the information processing apparatus 1. In addition, the embedded controller 31 has a power supply management function of controlling the power supply circuit 33. Note that the embedded controller 31 is constituted by a CPU, a ROM, a RAM, and the like (not illustrated), and includes an A/D input terminal, a D/A output terminal, a timer, and a digital input and output terminal of a plurality of channels. For example, the input unit 32 and the power supply circuit 33 are connected to the embedded controller 31 via the input and output terminals, and the embedded controller 31 controls an operation of each connected unit. In addition, the embedded controller 31 includes an SMBus, and is connected to the SSD 40 by the SMBus.

The input unit 32 is, for example, an input device such as a keyboard, a pointing device, and a touch pad.

The power supply circuit 33 includes, for example, a DC/DC converter, a charging and discharging unit, an AC/DC adapter, and the like, and converts a direct current voltage supplied from an external power supply or from a battery into a plurality of voltages required for operating the information processing apparatus 1. In addition, the power supply circuit 33 supplies power to each unit of the information processing apparatus 1 based on control from the embedded controller 31.

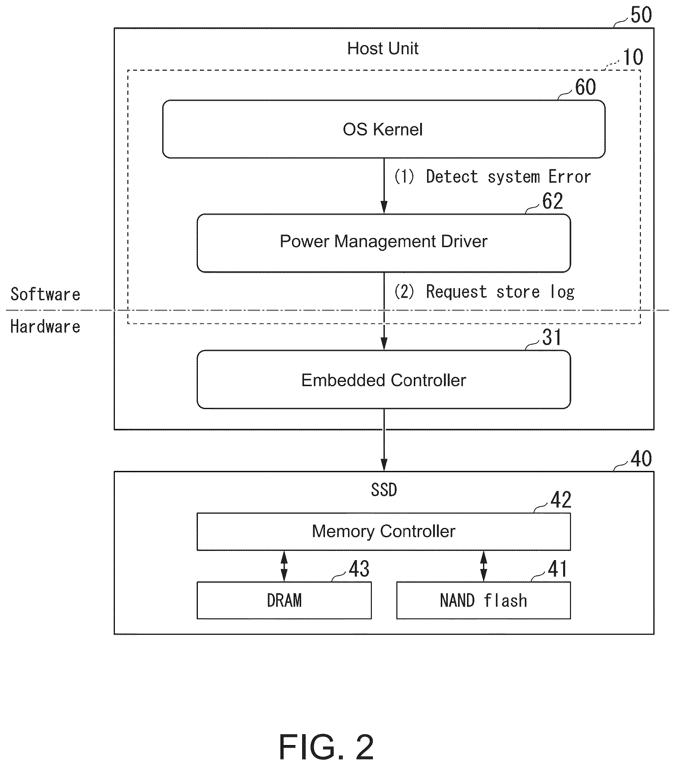

Next, a configuration related to a function of preserving the log in the SSD 40 in the information processing apparatus 1 according to the present embodiment will be described with reference to FIG. 2. FIG. 2 is a block diagram illustrating an example of a functional configuration of the information processing apparatus 1 according to the present embodiment. In FIG. 2, the same reference numerals are assigned to configurations corresponding to those in FIG. 1. As illustrated in FIG. 2, the information processing apparatus 1 includes the host unit 50 and the SSD 40. In FIG. 2, only the main configuration related to the present embodiment is illustrated.

The host unit 50 includes a host control unit 10 and the embedded controller 31. The host control unit 10 is a functional unit realized by, for example, the CPU 11, the chip set 21, and the system memory 12, and executes various types of processing such as executing information processing accompanied by input and output of data to and from the SSD 40.

The host control unit 10 includes an OS kernel 60 and a power management driver 62. The OS kernel 60 is, for example, software that has basic functions of an OS such as Windows (registered trademark).

The power management driver 62 is a driver that mediates communication between the OS kernel 60 and the embedded controller 31, and may be included in a function of the OS or may be provided as a driver executed on the OS.

When detecting occurrence of an error (system error) in which the OS cannot normally continue system processing executed by the OS, the OS kernel 60 outputs error information based on the occurrence of the system error to the power management driver 62 (detect system error).

When the error information output from the OS kernel 60 is acquired, the power management driver 62 transmits a request signal for making a request for preservation of a log in the SSD 40 to the embedded controller 31 (request store log).

When the embedded controller 31 acquires the request signal from the power management driver 62, the embedded controller 31 transmits instruction information for instructing the SSD 40 to retain the log data. The SSD 40 stores the log data stored in the ring buffer area in the DRAM 43 in another area in the DRAM 43 in response to the acquisition of the instruction information transmitted from the embedded controller 31.

The other area is a specific area in the DRAM 43 that is set in advance for the purpose of retaining the log data outside the ring buffer area so that the log data is not overwritten, and is an area in which at least the amount of data stored in the ring buffer area can be retained.

As described above, when detecting occurrence of an error (system crash) in which the system processing executed by the OS cannot be normally continued, the host control unit 10 outputs a request signal for making a request for preservation of the log in the SSD 40, thereby transmitting an instruction signal for instructing the SSD 40 to retain the log data via the embedded controller 31. Accordingly, the SSD 40 can preserve the log in the SSD 40 by retaining the log data when the system crashes outside the ring buffer area.

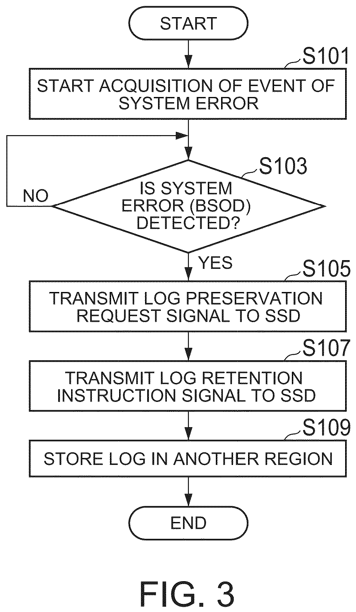

Next, an operation of log preservation processing of preserving the log in the SSD 40 described with reference to FIG. 2 will be described with reference to FIG. 3.

FIG. 3 is a flowchart illustrating an example of log preservation processing according to the present embodiment.

(Step S101) The OS kernel 60 starts acquisition of an event of a system error that occurs in the system processing by the OS. Then, the processing proceeds to processing of step S103.

(Step S103) The OS kernel 60 determines whether or not the system error is detected based on the event of the system error. The system error is an error in which the OS cannot normally continue the system processing, and is, for example, an error in which screen display is a blue screen of death (BSOD). When it is determined that the system error is not detected (NO in step S103), the host control unit 10 performs the processing of step S103 again, and when it is determined that the system error is detected (YES in step S103), the host control unit 10 proceeds to the processing of step S105.

(Step S105) The OS kernel 60 outputs error information based on the occurrence of the system error to the power management driver 62. When the power management driver 62 acquires the error information output from the OS kernel 60, the power management driver 62 outputs a request signal (log preservation request signal) for making a request for preservation of the log in the SSD 40 to the embedded controller 31. Then, the processing proceeds to the processing of step S107.

(Step S107) When the embedded controller 31 acquires the log preservation request signal from the power management driver 62, the embedded controller 31 transmits an instruction signal (log retention instruction signal) for instructing the SSD 40 to retain the log data.

(Step S109) The SSD 40 stores the log data stored in the ring buffer area in the DRAM 43 in another area in the DRAM 43 in response to acquisition of the log retention instruction signal transmitted from the embedded controller 31.

As described above, the information processing apparatus 1 according to the present embodiment includes the system memory 12 that temporarily stores a program of a system (OS or the like), the processor (CPU 11, the chip set 21, or the like) that executes system processing by the program stored in the system memory 12, and the SSD 40 (an example of a device). The SSD 40 includes a controller (for example, the memory controller 42) and an internal memory (for example, the flash memory 41 and the DRAM 43) at the inside, and stores a log history of processing executed inside the SSD 40 in a part of the ring buffer area in the internal memory (for example, the DRAM 43) as log data (history information). Then, when detecting occurrence of an error (system error) in which the system processing by the OS cannot be normally continued, the processor outputs information based on the occurrence of the system error due to the system processing. The SSD 40 stores the log data stored in the ring buffer area in the internal memory (for example, the DRAM 43) in another area in the internal memory (for example, the DRAM 43) based on information based on the occurrence of the output system error due to the system processing.

Accordingly, since the information processing apparatus 1 retains the log data in the SSD 40 outside the ring buffer area in the internal memory (for example, the DRAM 43) in correspondence with a timing at which the system error occurs, even when the log data in the SSD 40 is updated thereafter, the log in the SSD 40 at that timing when the system error occurs can be preserved. Therefore, the information processing apparatus 1 can appropriately preserve a log (history) of processing executed inside the SSD 40 even when an error occurs in the system. As a result, even when the system crashes due to the SSD 40, it is possible to perform analysis by using the preserved log.

For example, the information processing apparatus 1 includes the processor and the embedded controller 31 that can communicate with the processor, and the processor (the CPU 11, the chip set 21, or the like) outputs information (for example, the log preservation request signal) based on the occurrence of the system error due to the system processing to the embedded controller 31 when the occurrence of the system error is detected. When the embedded controller 31 acquires information (for example, the log preservation request signal) based on the occurrence of the output system error due to the system processing, the embedded controller 31 transmits an instruction signal (the log retention instruction signal) for instructing the SSD 40 to retain the log data. The SSD 40 stores the log data stored in the ring buffer area in the internal memory (for example, the DRAM 43) in another area in the internal memory (for example, the DRAM 43) in response to acquisition of the log retention instruction signal transmitted from the embedded controller 31.

Accordingly, when a system error occurs, the information processing apparatus 1 can retain the log data in the SSD 40 outside the ring buffer area in the internal memory (for example, the DRAM 43) via the embedded controller 31 without changing the processing of the OS, and can preserve the log in the SSD 40 when the system error occurs. Therefore, the information processing apparatus 1 can appropriately preserve a log (history) of processing executed inside the SSD 40 even when an error occurs in the system.

In addition, when the system error occurs, the processor (for example, the CPU 11) displays a blue screen on the display unit 14.

Accordingly, when the system error in which the screen display becomes a blue screen occurs, since the information processing apparatus 1 retains the log data in the SSD 40 outside the ring buffer area in the internal memory (for example, the DRAM 43) in correspondence with the occurrence timing, even when the log data in the SSD 40 is updated thereafter, the log in the SSD 40 when the system error occurs can be preserved. Therefore, the information processing apparatus 1 can appropriately preserve a log (history) of processing executed inside the SSD 40 even when an error occurs in the system.

In addition, the control method in the information processing apparatus 1 according to the present embodiment includes a step of detecting occurrence of an error (system error) in which the system processing by the OS cannot be normally continued by the processor (the CPU 11, the chip set 21, or the like), a step of outputting information based on the occurrence of the system error due to the system processing when the occurrence of the system error is detected, and a step of storing the log data stored in the ring buffer area in the internal memory (for example, the DRAM 43) in another area in the internal memory (for example, the DRAM 43) based on the information based on the occurrence of the output system error due to the system processing by the SSD 40 (an example of the device).

Accordingly, in the control method in the information processing apparatus 1, since the log data in the SSD 40 is retained outside the ring buffer area in the internal memory (for example, the DRAM 43) in accordance with the timing at which the system error occurs, even when the log data in the SSD 40 is updated thereafter, the log in the SSD 40 at the time at which the system error occurs can be preserved. Therefore, the control method in the information processing apparatus 1 can appropriately preserve the log (history) of the processing executed inside the SSD 40 even when an error occurs in the system. As a result, even when the system crashes due to the SSD 40, it is possible to perform analysis by using the preserved log.

The SSD 40 may store the log data stored in the ring buffer area in the DRAM 43 in the flash memory 41. In this case, it is possible to analyze the log by accessing the log data retained in the flash memory 41 after the system is rebooted without using a special jig or the like.

### <Second Embodiment>

Next, a second embodiment of the present invention will be described. In the first embodiment, when detecting occurrence of a system error due to the OS, the processor (the CPU 11, the chip set 21, or the like) may request the SSD 40 to preserve the log via the embedded controller 31, but the processor may request the SSD 40 to preserve the log without via the embedded controller 31.

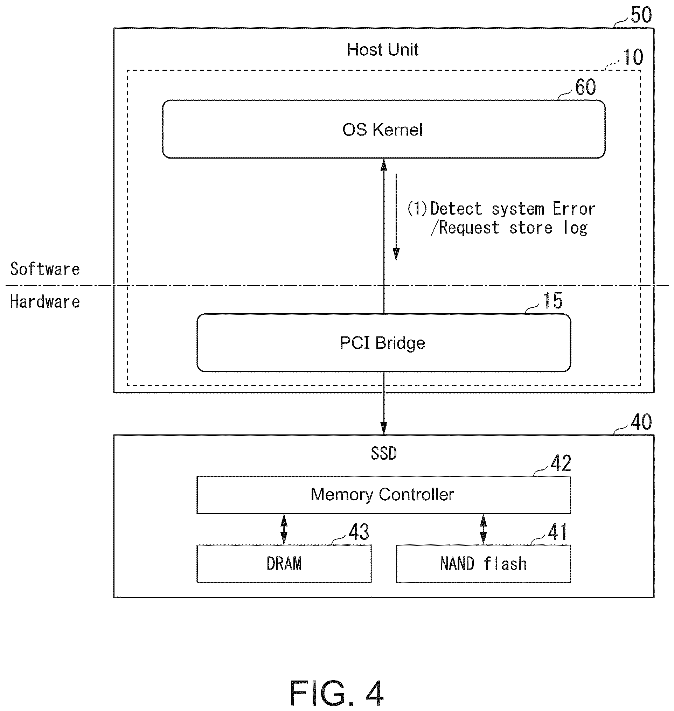

FIG. 4 is a block diagram illustrating an example of a functional configuration of an information processing apparatus 1 according to the present embodiment. In FIG. 4, the same reference numerals are assigned to configurations corresponding to FIG. 2. In FIG. 4, only the main configuration related to the present embodiment is illustrated.

The host unit 50 includes a host control unit 10. The host control unit 10 is a functional unit realized by, for example, the CPU 11, the chip set 21, and the system memory 12, and includes an OS kernel 60 and a PCI bridge 15.

The PCI bridge 15 is provided inside the chip set 21 or is connected to the chip set 21, and connects the CPU 11 and the SSD 40 by using a PCI bus or a PCI-Express bus.

When detecting occurrence of an error (system error) in which the OS cannot normally continue the system processing executed by the OS, the OS kernel 60 transmits error information based on the occurrence of the system error to the SSD 40 via the PCI bridge 15 (detect system error). For example, the OS kernel 60 may transmit, as the error information, a request signal (log preservation request signal) for making a request for preservation of the log in the SSD 40 to the SSD 40 via the PCI bridge 15 (request store log).

The SSD 40 stores the log data stored in the ring buffer area in the DRAM 43 in another area in the DRAM 43 in response to acquisition of the error information (for example, the log preservation request signal) transmitted from the OS kernel 60.

As described above, in the information processing apparatus 1 according to the present embodiment, when detecting occurrence of an error (system error) in which the system processing by the OS cannot be normally continued has occurred, the processor (the CPU 11, the chip set 21, or the like) transmits information (for example, the log preservation request signal) based on the occurrence of the system error due to the system processing to the SSD 40. The SSD 40 stores the log data stored in the ring buffer area in the internal memory (for example, the DRAM 43) in another area in the internal memory (for example, the DRAM 43) in response to acquisition of the information (for example, the log preservation request signal) based on occurrence of the transmitted system error due to the system processing.

Accordingly, since the information processing apparatus 1 retains the log data in the SSD 40 outside the ring buffer area in the internal memory (for example, the DRAM 43) in correspondence with a timing at which the system error occurs, even when the log data in the SSD 40 is updated thereafter, the log in the SSD 40 at that timing when the system error occurs can be preserved. Therefore, the information processing apparatus 1 can appropriately preserve a log (history) of processing executed inside the SSD 40 even when an error occurs in the system. As a result, even when the system crashes due to the SSD 40, it is possible to perform analysis by using the preserved log.

As in the first embodiment, the SSD 40 may store the log data stored in the ring buffer area in the DRAM 43 in the flash memory 41. In this case, it is possible to analyze the log by accessing the log data retained in the flash memory 41 after the system is rebooted without using a special jig or the like.

In addition, according to the first and second embodiments described above, it is possible to improve efficiency of a failure analysis as compared with the related art. For example, in the related art, since a system error suspected to be a problem of the SSD cannot be analyzed from the log of the SSD, there are the following problems.

### (Problems in Related Art)

In the related art, it is necessary to detect the problem of the SSD by using other methods, and the analysis is difficult (SSD UART Debug, bus trace, and the like).

In the analysis using a device such as a bus trace, there is a problem in the analysis method itself, such as a change in a condition of a signal quality and no reproduction of a problem itself.

When a problem such as Field issue occurs in a system that has already been commercialized, analysis is difficult due to complexity of a method.

There has been a problem as described above in the related art, but by adopting the present embodiment, it is possible to perform failure analysis from both an event at the time of the system error and the log in the SSD 40, and it is possible to quickly identify a root cause.

### <Third Embodiment>

Next, a third embodiment of the present invention will be described. In the present embodiment, the information processing apparatus 1 preserves a log by acquiring log data of processing executed inside the SSD 40 from the SSD 40 on a system side in correspondence with a timing at which a system error occurs. For example, the information processing apparatus 1 includes the log data acquired on the system side in a memory dump file generated in a case of a system error, and thus the log can be easily analyzed later.

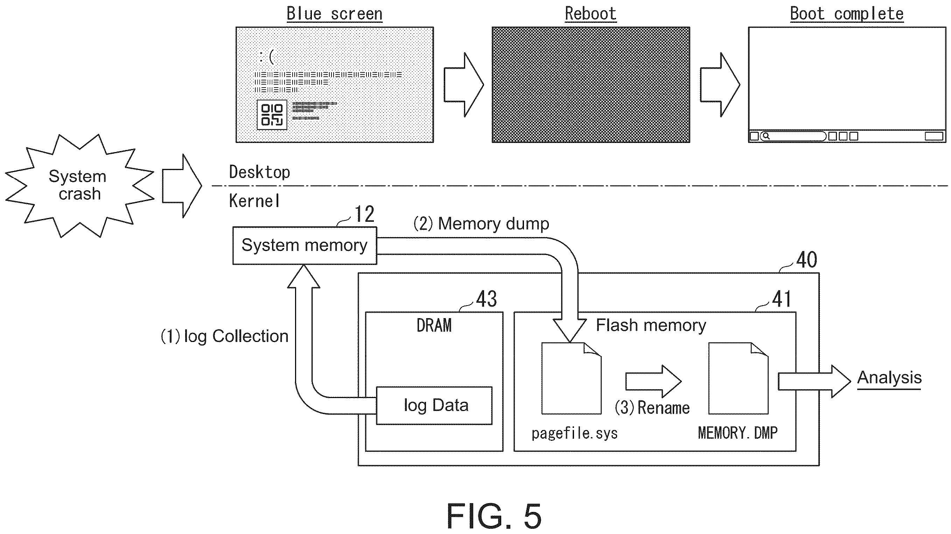

An outline of a log preservation function of preserving a log in the SSD 40 in the present embodiment will be described with reference to FIG. 5. FIG. 5 is a diagram illustrating an outline of the log preservation function according to the present embodiment.

When a system error occurs and the system crashes, screen display of the desktop screen becomes a blue screen of death (BSOD). The OS performs memory dump on at least a part of data in the system memory 12, but before that, the OS collects log data stored in the ring buffer area in the DRAM 43 of the SSD 40 and stores the log data in the system memory 12.

Thereafter, the OS generates a dump file by performing memory dump on at least a part of data including the log data in the system memory 12, and overwrites the dump file (pagefile.sys) retained in the flash memory 41 of the SSD 40.

When the OS is forcibly rebooted and boot is completed, and a system error has occurred before the boot, the dump file (pagefile.sys) is renamed (MEMORY.DMP). As a result, even when the log data in the SSD 40 is updated thereafter, the log in the SSD 40 when a system error occurs can be preserved, and the log can be analyzed after the reboot.

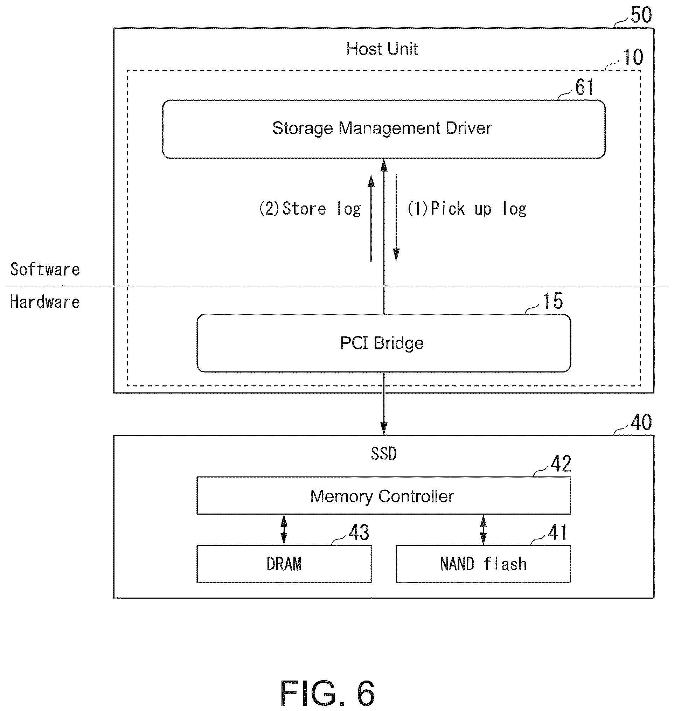

FIG. 6 is a block diagram illustrating an example of a functional configuration of the information processing apparatus 1 according to the present embodiment. In FIG. 6, the same reference numerals are assigned to the configurations corresponding to FIG. 2 and FIG. 4. In FIG. 6, only the main configuration related to the present embodiment is illustrated.

The configuration illustrated in FIG. 6 is a configuration in which a storage management driver 61 and the SSD 40 are connected to each other via the PCI bridge 15 similarly to the configuration illustrated in FIG. 4. The storage management driver 61 is, for example, a driver that is responsible for a function of managing input and output of data to and from the SSD 40 among functions executed by an OS such as Windows (registered trademark).

When detecting occurrence of an error (system error) in which system processing executed by the OS cannot be normally continued, the storage management driver 61 transmits a log collection signal for making a request for collection of log data stored in the ring buffer area in the DRAM 43 of the SSD 40 to the SSD 40 via the PCI bridge 15 (pick up log).

When the log collection signal is acquired from the storage management driver 61, the SSD 40 transmits the log data stored in the ring buffer area in the DRAM 43 to the storage management driver 61 via the PCI bridge 15. The storage management driver 61 acquires the log data transmitted from the SSD 40 and stores the log data in the system memory 12 (store log).

Note that thereafter, as the processing of the OS, a memory dump is performed when a system error occurs to generate a dump file including the log data, and the dump file retained in the flash memory 41 in the SSD 40 is updated (overwritten). In addition, by renaming and retaining the dump file, the log is preserved even when the dump file is updated thereafter.

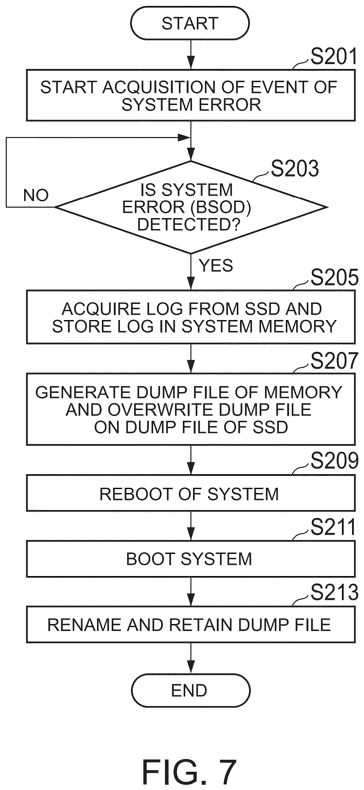

Next, an operation of log preservation processing of preserving the log in the SSD 40 described with reference to FIG. 6 will be described with reference to FIG. 7.

FIG. 7 is a flowchart illustrating an example of the log preservation processing according to the present embodiment.

(Step S201) The storage management driver 61 starts acquisition of an event of a system error that occurs in system processing by the OS. Then, the processing proceeds to processing of step S203.

(Step S203) The storage management driver 61 determines whether or not the system error is detected based on the event of the system error. The system error is an error in which the OS cannot normally continue the system processing, and is, for example, an error in which screen display is a blue screen of death (BSOD). When it is determined that the system error is not detected (NO in step S203), the host control unit 10 performs the processing of step S203 again, and when it is determined that the system error is detected (YES in step S203), the host control unit 10 proceeds to the processing of step S205.

(Step S205) The storage management driver 61 acquires the log data from the SSD 40 and stores the log data in the system memory 12 by transmitting a log collection signal for making a request for collection of the log data stored in the ring buffer area in the DRAM 43 of the SSD 40 to the SSD 40 via the PCI bridge 15. Then, the processing proceeds to processing of step S207.

(Step S207) The OS generates a dump file including the log data stored in the system memory 12, and updates (overwrites) the dump file retained in the flash memory 41 in the SSD 40. Then, the processing proceeds to processing of step S209.

(Step S209) The OS forcibly reboots the system by an operation of a user (for example, long pressing of a power button), and the processing proceeds to step S211.

(Step S211) When the system is booted, the OS proceeds to processing of step S213.

(Step S213) When a system error has occurred before the reboot, the storage management driver 61 renames and retains the dump file retained in the flash memory 41 in the SSD 40.

As described above, the information processing apparatus 1 according to the present embodiment includes the system memory 12 that temporarily stores a program of a system (OS or the like), the processor (CPU 11, the chip set 21, or the like) that executes system processing by the program stored in the system memory 12, and the SSD 40 (an example of a device). The SSD 40 includes a controller (for example, the memory controller 42) and an internal memory (for example, the flash memory 41 and the DRAM 43) at the inside, and stores a log history of processing executed inside the SSD 40 in a part of the ring buffer area in the internal memory (for example, the DRAM 43) as log data (history information). Then, when detecting occurrence of an error (system error) in which the system processing cannot be normally continued, the processor acquires the log data stored in the ring buffer area in the internal memory (for example, the DRAM 43) of the SSD 40 from the SSD 40 and stores the log data in the system memory 12.

Accordingly, since the information processing apparatus 1 collects the log data in the SSD 40 on the system side and retains the log data in the system memory 12 in correspondence with the timing at which the system error occurs, even when the log data in the SSD 40 is updated thereafter, the log in the SSD 40 at the time at the system error occurs can be preserved. Therefore, the information processing apparatus 1 can appropriately preserve a log (history) of processing executed inside the SSD 40 even when an error occurs in the system.

In addition, the processor (the CPU 11, the chip set 21, or the like) acquires the log data stored in a ring buffer area in the internal memory (for example, the DRAM 43) of the SSD 40 from the SSD 40, stores the log data in the system memory 12, and then generates at least a part of data including the log data stored in the system memory 12 as a dump file and stores the dump file in the internal memory (for example, the flash memory 41) of the SSD 40. Then, the processor (the CPU 11, the chip set 21, or the like) reboots the system and then changes the file name of the dump file and stores the dump file in the internal memory (for example, the flash memory 41) in the SSD 40.

Accordingly, the information processing apparatus 1 can preserve the log in the SSD 40 when a system error occurs by generating a dump file including the log data in the SSD 40 retained in the system memory 12 when the system error occurs, storing the dump file in the internal memory (for example, the flash memory 41) in the SSD 40, and renaming the dump file after the reboot. Therefore, the information processing apparatus 1 can appropriately preserve a log (history) of processing executed inside the SSD 40 even when an error occurs in the system. As a result, even when the system crashes due to the SSD 40, it is possible to perform analysis by using the preserved log after the reboot.

In addition, when the system error occurs, the processor (for example, the CPU 11) displays a blue screen on the display unit 14.

Accordingly, when a system error in which the screen display becomes a blue screen occurs, since the information processing apparatus 1 collects the log data in the SSD 40 on the system side and retains the log data in the system memory 12 in correspondence with the timing of the occurrence of the system error, even when the log data in the SSD 40 is updated thereafter, the log in the SSD 40 when the system error occurs can be preserved. Therefore, the information processing apparatus 1 can appropriately preserve a log (history) of processing executed inside the SSD 40 even when an error occurs in the system.

In addition, the control method in the information processing apparatus 1 according to the present embodiment includes a step of detecting occurrence of an error (system error) in which the system processing by the OS cannot be normally continued by the processor (the CPU 11, the chip set 21, or the like, and a step of acquiring the log data (history information) stored in the ring buffer area in the SSD 40 (an example of a device) from the SSD 40 and storing the log data in the system memory 12 when it is detected that the system error has occurred by the processor (the CPU 11, the chip set 21, or the like).

Accordingly, in the control method in the information processing apparatus 1, since the log data in the SSD 40 is collected on the system side and retained in the system memory 12 in correspondence with the timing at which the system error occurs, even when the log data in the SSD 40 is updated thereafter, the log in the SSD 40 at the time at which the system error occurs can be preserved. Therefore, the control method in the information processing apparatus 1 can appropriately preserve the log (history) of the processing executed inside the SSD 40 even when an error occurs in the system.

### <Fourth Embodiment>

Next, a fourth embodiment of the present invention will be described. In the third embodiment, an example in which the log data stored in the ring buffer area of the SSD 40 is collected and stored in the system memory 12 when a system error occurs is described, but the log data retained outside the ring buffer area in the SSD 40 may be collected in correspondence with a timing at which the system error occurs by performing the log preservation processing described in the first embodiment.

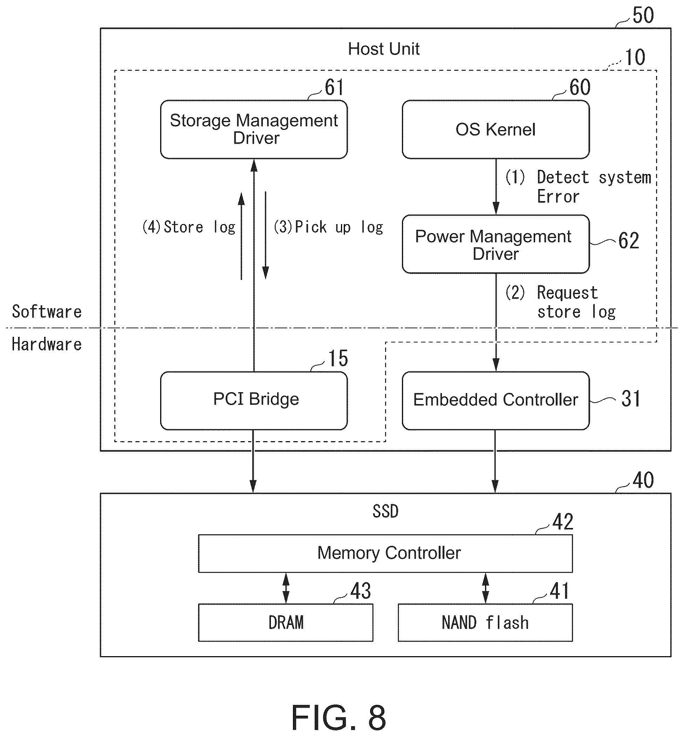

FIG. 8 is a block diagram illustrating an example of a functional configuration of the information processing apparatus 1 according to the present embodiment. The configuration illustrated in FIG. 8 corresponds to a configuration in which the configuration illustrated in FIG. 2 and the configuration illustrated in FIG. 6 are combined, and the same reference numerals are assigned to configurations corresponding to the drawings. In FIG. 8, only the main configuration related to the present embodiment is illustrated.

When detecting occurrence of an error (system error) in which the OS cannot normally continue system processing executed by the OS, the OS kernel 60 outputs error information based on the occurrence of the system error to the power management driver 62 (detect system error).

When the error information output from the OS kernel 60 is acquired, the power management driver 62 transmits a request signal for making a request for preservation of a log in the SSD 40 to the embedded controller 31 (request store log).

When the embedded controller 31 acquires the request signal from the power management driver 62, the embedded controller 31 transmits instruction information for instructing the SSD 40 to retain the log data. The SSD 40 stores the log data stored in the ring buffer area in the DRAM 43 in another area in the DRAM 43 in response to the acquisition of the instruction information transmitted from the embedded controller 31.

Next, the storage management driver 61 transmits a log collection signal for making a request for collection of the log data stored in the ring buffer area in the DRAM 43 of the SSD 40 to the SSD 40 via the PCI bridge 15 (pick up log).

When the log collection signal is acquired from the storage management driver 61, the SSD 40 transmits the log data stored in the ring buffer area in the DRAM 43 to the storage management driver 61 via the PCI bridge 15. The storage management driver 61 acquires the log data transmitted from the SSD 40 and stores the log data in the system memory 12 (store log).

Note that thereafter, as the processing of the OS, a memory dump is performed when a system error occurs to generate a dump file including the log data, and the dump file retained in the flash memory 41 in the SSD 40 is updated (overwritten). In addition, by renaming and retaining the dump file, the log is preserved even when the dump file is updated thereafter.

As described above, in the information processing apparatus 1 according to the present embodiment, when detecting occurrence of a system error, the processor (the CPU 11, the chip set 21, or the like) outputs information (for example, a log preservation request signal) based on the occurrence of the system error due to the system processing to the embedded controller 31. When the embedded controller 31 acquires information (for example, the log preservation request signal) based on the occurrence of the output system error due to the system processing, the embedded controller 31 transmits an instruction signal (the log retention instruction signal) for instructing the SSD 40 to retain the log data. The SSD 40 stores the log data stored in the ring buffer area in the internal memory (for example, the DRAM 43) in another area in the internal memory (for example, the DRAM 43) in response to acquisition of the log retention instruction signal transmitted from the embedded controller 31. Then, when detecting occurrence of a system error, the processor acquires the log data stored in another area in the internal memory (for example, the DRAM 43) of the SSD 40.

As a result, the information processing apparatus 1 exhibits the same effect as in the third embodiment. Since the information processing apparatus 1 collects the log data preserved in the SSD 40 on the system side in correspondence with a timing at which the system error occurs and retains the log data in the system memory 12, when the log data in the SSD 40 is updated thereafter, the log in the SSD 40 at a time at which the system error occurs can be preserved. Therefore, the information processing apparatus 1 can appropriately preserve a log (history) of processing executed inside the SSD 40 even when an error occurs in the system.

### <Fifth Embodiment>

Next, a fifth embodiment of the present invention will be described. In the third embodiment, an example in which the log data stored in the ring buffer area of the SSD 40 is collected and stored in the system memory 12 when a system error occurs is described, but the log data retained outside the ring buffer area in the SSD 40 may be collected in correspondence with a timing at which the system error occurs by performing the log preservation processing described in the second embodiment.

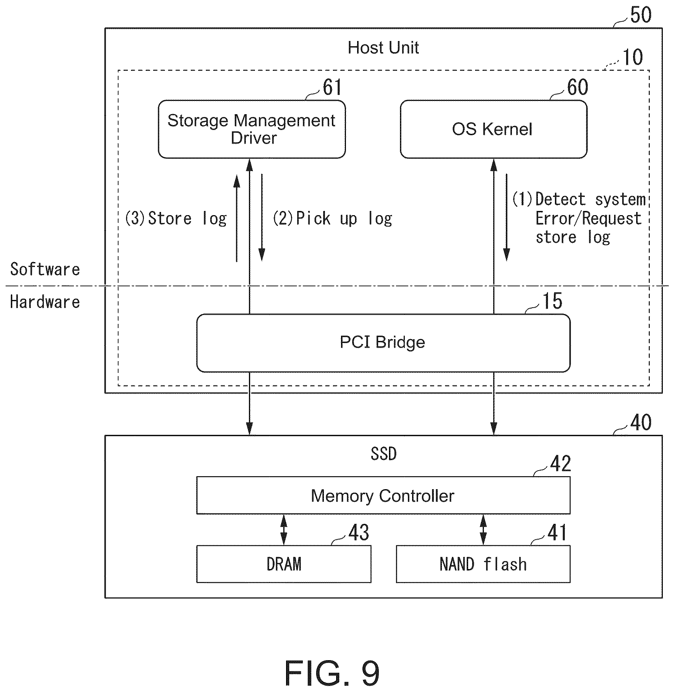

FIG. 9 is a block diagram illustrating an example of a functional configuration of the information processing apparatus 1 according to the present embodiment. The configuration illustrated in FIG. 9 corresponds to a configuration in which the configuration illustrated in FIG. 4 and the configuration illustrated in FIG. 6 are combined, and the same reference numerals are assigned to the configurations corresponding to the drawings. In FIG. 9, only the main configuration related to the present embodiment is illustrated.

When detecting occurrence of an error (system error) in which the OS cannot normally continue the system processing executed by the OS, the OS kernel 60 transmits error information based on the occurrence of the system error to the SSD 40 via the PCI bridge 15 (detect system error). For example, the OS kernel 60 may transmit, as the error information, a request signal (log preservation request signal) for making a request for preservation of the log in the SSD 40 to the SSD 40 via the PCI bridge 15 (request store log).

The SSD 40 stores the log data stored in the ring buffer area in the DRAM 43 in another area in the DRAM 43 in response to acquisition of the error information (for example, the log preservation request signal) transmitted from the OS kernel 60.

Next, the storage management driver 61 transmits a log collection signal for making a request for collection of the log data stored in the ring buffer area in the DRAM 43 of the SSD 40 to the SSD 40 via the PCI bridge 15 (pick up log).

When the log collection signal is acquired from the storage management driver 61, the SSD 40 transmits the log data stored in the ring buffer area in the DRAM 43 to the storage management driver 61 via the PCI bridge 15. The storage management driver 61 acquires the log data transmitted from the SSD 40 and stores the log data in the system memory 12 (store log).

Note that thereafter, as the processing of the OS, a memory dump is performed when a system error occurs to generate a dump file including the log data, and the dump file retained in the flash memory 41 in the SSD 40 is updated (overwritten). In addition, by renaming and retaining the dump file, the log is preserved even when the dump file is updated thereafter.

As described above, in the information processing apparatus 1 according to the present embodiment, when detecting occurrence of an error (system error) in which the system processing by the OS cannot be normally continued has occurred, the processor (the CPU 11, the chip set 21, or the like) transmits information (for example, the log preservation request signal) based on the occurrence of the system error due to the system processing to the SSD 40. The SSD 40 stores the log data stored in the ring buffer area in the internal memory (for example, the DRAM 43) in another area in the internal memory (for example, the DRAM 43) in response to acquisition of the information (for example, the log preservation request signal) based on occurrence of the transmitted system error due to the system processing. Then, when detecting occurrence of a system error, the processor acquires the log data stored in another area in the internal memory (for example, the DRAM 43) of the SSD 40.

As a result, the information processing apparatus 1 exhibits the same effect as in the third embodiment. Since the information processing apparatus 1 collects the log data preserved in the SSD 40 on the system side in correspondence with a timing at which the system error occurs and retains the log data in the system memory 12, when the log data in the SSD 40 is updated thereafter, the log in the SSD 40 at a time at which the system error occurs can be preserved. Therefore, the information processing apparatus 1 can appropriately preserve a log (history) of processing executed inside the SSD 40 even when an error occurs in the system.

In addition, according to the third, fourth, and fifth embodiments described above, it is possible to improve the efficiency of the failure analysis as compared with the related art. For example, in the related art, when a problem of the SSD is suspected, it is necessary to reproduce the problem and analyze the problem after prohibiting the writing out of a memory dump (crash dump) at the time of a system crash, and thus the following problems arise.

### (Problems in Related Art)

It is necessary to reproduce the problem again to acquire the log of the SSD.

When a problem occurs, it is difficult to analyze the problem because there is no method of determining whether or not the problem is caused by the SSD (because the crash dump cannot be checked).

In a system that has already been commercialized such as Field issue, it is difficult to analyze the problem when the problem occurs.

Although the above-described problems have been present in the related art, by adopting the present embodiment, it is possible to perform failure analysis from both the dump file generated by the system and the log in the SSD 40, and to quickly identify the root cause.

Although each of the embodiments of the present invention is described in detail with reference to the drawings, the specific configuration is not limited to the above-described embodiments, and design and the like within a range not departing from the scope of the present invention are also included. For example, the configurations described in the above-described embodiments can be optionally combined.

For example, in the above-described embodiment, an example in which the information processing apparatus 1 is a clamshell type (laptop) PC is described, but the present invention is not limited to this, and for example, another information processing apparatus such as a tablet terminal device or a desktop type PC may be used.

In addition, in the above-described embodiment, an example in which Windows (registered trademark) is used as an example of the OS of the information processing apparatus 1 is described, but the present invention is not limited to this, and another OS may be applied.

In addition, in the above-described embodiment, the SSD 40 is described as an example of the device that is a target of preservation of the internal log, but the present disclosure is not limited thereto. The device that is a target of preservation of the internal log may be a storage device other than the SSD, and the same can be applied to all devices that store a log (history) of processing executed inside the device in the ring buffer without limitation to the storage device. For example, as the device to be the target of the preservation of the internal log, a device used in a subsystem such as face detection processing, audio processing, and wireless communication can be applied.

In addition, an interface between each unit of the host unit 50 and the SSD 40 in the above embodiment can be optionally determined. For example, in FIGS. 4 and 9, an example in which the OS kernel 60 communicates with the SSD 40 via the PCI bridge 15 via the PCI is described, but the present invention is not limited to this, and the OS kernel 60 may communicate with the SSD 40 by using, for example, a unique driver of a vendor. In addition, in the above-described embodiment, the example in which the SMBus is used as an example of the interface with the embedded controller 31 is described, but the present invention is not limited to this, and for example, another interface such as an inter-integrated circuit (I2C) bus may be used, or a change in voltage, a voltage pulse, or the like may be used.

The information processing apparatus 1 described above includes a computer system on an inner side. Then, a program for realizing the functions of each configuration included in the information processing apparatus 1 may be recorded on a computer-readable recording medium, and the program recorded on the recording medium may be loaded into the computer system and executed to perform processing in each configuration included in the information processing apparatus 1. Here, the phrase "program recorded on the recording medium may be loaded into the computer system and executed" includes installation of the program in the computer system. The term "computer system" stated here includes hardware such as an OS and peripheral devices. In addition, the term "computer system" may include a plurality of computer devices connected via a network including a communication line such as the Internet, a WAN, a LAN, or a dedicated line. In addition, the term "computer-readable recording medium" refers to a storage device such as a portable medium such as a flexible disk, a magneto-optical disc, a ROM, or a CD-ROM, or a hard disk incorporated in a computer system. As described above, the recording medium in which the program is stored may be a non-transitory recording medium such as a CD-ROM.

In addition, the recording medium also includes a recording medium provided inside or outside the recording medium accessible from a distribution server to distribute the program. Note that a configuration in which the program is divided into a plurality of portions, and then the divided portions are combined in each configuration provided in the information processing apparatus 1 at different timings, or a configuration in which different distribution servers distribute each of the divided programs may be used. Further, the term "computer-readable recording medium" includes a medium that holds a program for a certain period of time such as a volatile memory (RAM) inside a computer system serving as a server or a client when a program is transmitted via a network. In addition, the program may be a program for realizing a part of the above-described functions. Furthermore, the program may be a so-called difference file (difference program) that is able to be realized in combination with a program already recorded in the computer system.

In addition, a part or all of the functions of the information processing apparatus 1 in the above-described embodiment may be realized as an integrated circuit such as a large scale integration (LSI). Each of the above-described functions may be individually processed, or a part or all of the above-described functions may be integrated and processed. In addition, a method of integrating circuits is not limited to the LSI, and may be realized by a dedicated circuit or a general-purpose processor. In addition, when a technique of integrating circuits appears as a substitute for the LSI due to advancement of a semiconductor technique, an integrated circuit using the technique may be used.

### Description of Symbols

- 1: laptop PC
- 10: host control unit
- 11: CPU
- 12: system memory
- 13: video subsystem
- 14: display unit
- 15: PCI bridge
- 21: chip set
- 22: BIOS memory
- 31: embedded controller (EC)
- 32: input unit
- 33: power supply circuit
- 40: SSD
- 41: flash memory
- 42: memory controller
- 43: DRAM
- 50: host unit
- 60: OS kernel
- 61: storage management driver
- 62: power management driver

## Claims

1. An information processing apparatus (1) comprising:
a system memory (12) configured to temporarily store a program of a system;
a processor (11) configured to execute system processing by the program stored in the system memory; and
a device (40) that includes a controller (42) and an internal memory (41, 43) inside the device and configured to store a history of processing executed inside the device in a ring buffer area as history information, the ring buffer area being a part of the internal memory,
wherein when detecting occurrence of an error in which the system processing is not able to be normally continued, the processor is configured to acquire the history information stored in the ring buffer area in the device from the device, and store the history information in the system memory.

2. The information processing apparatus according to claim 1,
wherein the processor is configured to:
acquire the history information stored in the ring buffer area from the device and store the history information in the system memory, and then generate, as a dump file, at least a part of data including the history information stored in the system memory, and store the dump file in the internal memory in the device; and
change a file name of the dump file and store the dump file in the internal memory after the system is rebooted.

3. The information processing apparatus according to claim 1 or claim 2, further comprising:
an embedded controller, EC (31), capable of communicating with the processor, wherein:
when detecting the occurrence of the error, the processor is configured to output information to the EC based on the occurrence of the error due to the system processing;
when acquiring the information based on the occurrence of the output error due to the system processing, the EC is configured to transmit an instruction signal for instructing the device to store the history information;
the device is configured to store the history information stored in the ring buffer area in another area of the internal memory in response to acquisition of the instruction signal transmitted from the EC; and
when detecting the occurrence of the error in which the system processing is not able to be normally continued, the processor is configured to acquire the history information stored in the another area of the internal memory.

4. The information processing apparatus according to any preceding claim,
wherein when detecting the occurrence of the error, the processor is configured to transmit information to the device based on the occurrence of the error due to the system processing,
the device is configured to store the history information stored in the ring buffer area in another area of the internal memory in response to acquisition of the information based on the occurrence of the transmitted error due to the system processing, and
when detecting the occurrence of the error in which the system processing is not able to be normally continued, the processor is configured to acquire the history information stored in the another area of the internal memory.

5. The information processing apparatus according to any preceding claim,
wherein when the error occurs, the processor is configured to display a blue screen on a display unit.

6. A control method for an information processing apparatus (1) including a system memory (12) configured to temporarily store a program of a system, a processor (11) configured to execute system processing by the program stored in the system memory, and a device (40) that includes a controller (42) and an internal memory (41, 43) inside the device and configured to store a history of processing executed inside the device in a ring buffer area as history information, the buffer area being a part of the internal memory, the control method comprising:
a step of detecting (S201, S203), at the processor, occurrence of an error in which the system processing is not able to be normally continued; and
a step of acquiring (S205), at the processor, the history information stored in the ring buffer area of the device from the device and storing the history information in the system memory when detecting the occurrence of the error.

7. The control method according to claim 6, further comprising:
acquiring the history information stored in the ring buffer area from the device and storing the history information in the system memory, and then generating (S207), as a dump file, at least a part of data including the history information stored in the system memory, and storing the dump file in the internal memory in the device; and
changing (S213) a file name of the dump file and storing the dump file in the internal memory after the system is rebooted (S209, S211).

8. The control method according to claim 6 or claim 7, further comprising:
when detecting the occurrence of the error, outputting information to an embedded controller, EC (31), capable of communicating with the processor based on the occurrence of the error due to the system processing;
when acquiring the information based on the occurrence of the output error due to the system processing, transmitting an instruction signal for instructing the device to store the history information;
storing the history information stored in the ring buffer area in another area of the internal memory in response to acquisition of the instruction signal transmitted from the EC; and
when detecting the occurrence of the error in which the system processing is not able to be normally continued, acquiring the history information stored in the another area of the internal memory.

9. The control method according to any one of claims 7 to 9, further comprising:
when detecting the occurrence of the error, transmitting information to the device based on the occurrence of the error due to the system processing;
storing the history information stored in the ring buffer area in another area of the internal memory in response to acquisition of the information based on the occurrence of the transmitted error due to the system processing; and
when detecting the occurrence of the error in which the system processing is not able to be normally continued, acquiring the history information stored in the another area of the internal memory.

10. The control method of any one of claims 6 to 9, further comprising:
when the error occurs, displaying a blue screen on a display unit
